(19) Europäisches Patentamt
European Patent Office
Office européen des brevets

(11) **EP 4 095 195 A1**

(12) **EUROPEAN PATENT APPLICATION**

(43) Date of publication:
**30.11.2022  Bulletin 2022/48**

(21) Application number: **21175686.1**

(22) Date of filing: **25.05.2021**

(51) International Patent Classification (IPC):
**C08L 23/08** (2006.01)      **C08L 23/26** (2006.01)
**H01B 3/44** (2006.01)      **C08L 43/04** (2006.01)

(52) Cooperative Patent Classification (CPC):
(C-Sets available)
**H01B 3/441; C08L 23/0815; C08L 23/0869;**
**C08L 23/0892; C08L 23/26; C08L 43/04;**
C08L 2203/202; C08L 2312/08        (Cont.)

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Borealis AG**
**1020 Vienna (AT)**

(72) Inventors:
• **GSCHNEIDTNER, Tina**
  **44486 Stenungsund (SE)**
• **SULTAN, Bernt-Åke**
  **44486 Stenungsund (SE)**

(74) Representative: **Kador & Partner PartG mbB**
  **Corneliusstraße 15**
  **80469 München (DE)**

(54) **CROSSLINKABLE POLYOLEFIN COMPOSITIONS FOR WIRE AND CABLE APPLICATIONS**

(57)    The present invention relates to a crosslinkable polyolefin composition for wire and cable applications, and particularly for low voltage (LV) and medium voltage (MV) cables, to a cable comprising said compositions and to the use of said compositions for increasing the tensile strength and/or flexibility of a cable. The crosslinkable polyolefin composition of the invention comprises (a) 50 to 99 wt.%, based on the total polyolefin composition, of one or more alpha-olefin copolymer(s) containing monomer units with polar groups and monomer units with hydrolysable silane groups, wherein the monomer units with polar groups are present in an amount of from 1 to 25 mol.% based on the total polyolefin composition, and (b) 1 to 50 wt.%, based on the total polyolefin composition, of a copolymer of ethylene and a $C_3$ to $C_8$ alpha-olefin co-monomer having a density of from 850 to 970 $kg/m^3$ and a $MFR_{2.16}$ of from 0.1 to 50 g/10 min, determined according to ISO 1133 at a temperature of 190 °C and a load of 2.16 kg. A cable comprising such a crosslinkable polyolefin composition and its use for increasing the tensile strength and/or flexibility of a cable are disclosed as well.

(52) Cooperative Patent Classification (CPC): (Cont.)

C-Sets
**C08L 23/0815, C08L 23/0892;**
**C08L 23/0869, C08L 23/0815;**
**C08L 23/0892, C08L 23/0815;**
**C08L 23/26, C08L 23/0815;**
**C08L 43/04, C08L 23/0815**

**Description**

**Background of the Invention**

The present invention relates to crosslinkable polyolefin compositions for wire and cable applications, and particularly for low voltage (LV) and medium voltage (MV) cables, to a cable comprising said compositions and to the use of said compositions for increasing the tensile strength and/or flexibility of a cable.

Electric power cables for low voltages, i.e. voltages of below 6 kV, usually comprise an electric conductor which is coated with an insulation layer. Such a cable will in the following be referred to as single wire cable. Optionally, two or more of such single wire cables are surrounded by a common outermost sheath layer, the jacket.

The insulation layer of low voltage power cables usually is made of a polymer composition comprising a polymer base resin, such as a polyolefin. A material commonly used as a base resin is polyethylene. Furthermore, in the final cable the polymer base resin usually is crosslinked.

For this and other applications such as for welding cables or electric vehicle charging cables today primarily peroxide crosslinked EPR (ethylene-propylene rubber) is used. However, the manufacturing process of these cables is very complicated as one needs to crosslink first the insulation in a vulcanisation tube and then apply the jacket and once again let it go through the vulcanisation tube for crosslinking the jacket. Accordingly, most commonly both the insulation and the jacket is crosslinked for these kind of flexible cables. For standard non-flexible cables, only the insulation is crosslinked.

For low voltage cable insulation silane crosslinkable LDPE has been used in the past, giving a flexural modulus in the range of about 170 MPa. However, increased flexibility of cables is always desired. For example, PVC cables have commonly a flexural modulus in the range of about 100 MPa. However, PVC cannot be crosslinked and its operation temperature is limited to 70°C, compared to 90 °C for crosslinked LDPE.

Above that, cables needs to be more flexible for certain applications, e.g. certain industrial cables as well as cables intended for infrastructure and transport. Some examples are windmill cables, mining cables, welding cables, and charging cables.

For such cables an insulation/jacketing material with a flexural modulus below 50 MPa is desired and commonly EPR materials were used.

The flexibility of a wire/cable material must always be compromised versus its mechanical performance, depending on its application. A more flexible material will have an inferior/lower tensile strength and abrasion resistance. Therefore, commonly more rigid/stiffer materials were used in order to have sufficient tensile strength and abrasion resistance.

In a further aspect, cable joints between low voltage power cables preferably are formed in such a way that, after stripping off part of the insulation layer at the end of both cables to be joined and connecting the electric conductors, a new insulation layer covering the joint conductors is often formed of a polyurethane polymer. Accordingly, it is important that the polymer composition of the original insulation layer shows a good adhesion to the polyurethane polymer used for restoring the insulation layer so that the layer is not disrupted even under mechanical stress at the cable joints.

Highly polar vinylsilane ethylene copolymers typically reveal a very low flexural modulus of 30 MPa or below, which allows the potential use as a insulation/jacketing material for wire and cable applications. The flexibility range of these ethylene copolymers reaches the level of ethylene-propylene elastomers (EPR) and hence allows flexible cable applications such as windmill cables, charging cables or similar types of applications where high flexibility is on focus. However, it has been demonstrated that the mechanical properties are below the standard requirement for low voltage cables but more in the range of EPR materials. To broaden the spectrum of possible applications the mechanical properties of flexible polyolefin compositions for wire and cable applications are to be improved. Especially, properties of tensile strength and toughness have to be improved.

WO 2009/002845 A1 discloses the blend of up to 40% of an unmodified metallocene-catalyzed polyolefin elastomer into a silane-functionalized polymer, followed by moisture curing, resulting in a silane-cured composition with improved flexibility and sufficient hot set, tensile strength and elongation for low voltage insulation. The added elastomer contains no crosslinkable or functional groups.

EP 3 734 617 A1 discloses a cable comprising at least one layer comprising an ethylene/acrylate/silane terpolymer, and a silanol condensation catalyst. The polyethylene composition improves the adhesion towards polyurethane cast resins, so that durable joints between cables according to the invention can be made with polyurethane cast resins. On the other hand, the mechanical properties of a cable, in particular a low voltage (LV) power cable, such as the elongation at break and the flexural modulus are improved.

WO 00/68957 A1 discloses a cable having at least one insulating or protecting layer consisting of a crosslinked ethylene-alkyl (meth)acrylate-unsaturated silane terpolymer composition, wherein the alkyl (meth)acrylate comonomer comprises more than 5 mole% and the terpolymer composition has a tensile modulus, determined according to ISO 527-2 (1 mm/min) of less than 100 MPa. Preferably, the crosslinked ethylene-alkyl (meth)acrylate polymer is a moisture curable ethylene-alkyl (meth)acrylate-vinyl trialkoxysilane terpolymer.

Therefore, there is a need to provide improved polyolefin compositions for wire and cable applications, where the mechanical properties, particularly tensile strength and toughness are improved and the flexural modulus is still maintained at a high level or likewise improved. Moreover, the manufacture of such a polyolefin composition should be simplified.

## Summary of the Invention

Thus, the present invention is based on the finding of a new crosslinkable polyolefin composition comprising

(a) 50 to 99 wt.%, based on the total polyolefin composition, of one or more olefin copolymer(s) containing monomer units with polar groups and monomer units with hydrolysable silane groups, wherein the monomer units with polar groups are present in an amount of from 1 to 25 mol.% based on the total polyolefin composition, and

(b) 1 to 50 wt.%, based on the total polyolefin composition, of a copolymer of ethylene and a $C_3$ to $C_8$ alpha-olefin co-monomer having a density of from 850 to 970 kg/m$^3$ and a $MFR_{2.16}$ of from 0.1 to 50 g/10 min, determined according to ISO 1133 at a temperature of 190 °C and a load of 2.16 kg.

Preferred embodiments of the above crosslinkable polyolefin composition of the invention are recited in the dependent claims.

The present invention is further directed to a cable comprising at least one layer comprising the above crosslinkable polyolefin composition, wherein the at least one layer is preferably an insulation layer or a sheath layer of a cable.

The present invention is further directed to the use of the above crosslinkable polyolefin composition for increasing the tensile strength and/or flexibility of a cable.

## Detailed Description of the Invention

It is preferred that in the above crosslinkable polyolefin composition the one or more olefin copolymer (a) is one or more ethylene copolymer(s).

The polyolefin composition of the present invention comprises one or more alpha-olefin copolymer(s) (a). Preferably, the polyolefin composition comprises, or consists of, two alpha-olefin copolymers (a) which differ from each other, more preferably the polyolefin composition comprises, or consists of, one or more ethylene copolymer(s) (a).

The one or more alpha-olefin copolymer(s) (a) containing monomer units with polar groups may for example be produced by grafting of a polyolefin with a polar-group containing compound, i.e. by chemical modification of the polyolefin polymer by addition of a polar group containing compound mostly in a radical reaction. Grafting is e.g. described in US 3,646,155 and US 4,117,195.

It is, however, preferred that the one or more polyolefin copolymer(s) (a) is produced by copolymerization of an alpha-olefin in the presence of monomer units with polar groups and monomer units with hydrolysable silane groups.

In the case of copolymerization, the complete monomer unit with polar groups is designated by the expression "monomer units with polar groups ". Thus, the weight fraction of the monomer unit with polar groups in the polyolefin copolymer which has been obtained by copolymerization may simply be calculated by using the weight ratio of the monomers units with polar groups that have been polymerized into the polyolefin copolymer. For example, where an ethylene copolymer comprising polar groups is produced by copolymerization of ethylene monomers with a vinyl compound comprising a polar group, also the vinyl part, which after polymerization forms part of the polymer backbone, contributes to the weight fraction of the "monomer unit with polar groups".

Preferably, the monomer units with polar groups are selected from siloxane, amide, anhydride, carboxylic, carbonyl, hydroxyl, ester and/or epoxy group.

As examples of monomer units with polar groups may be mentioned the following: (a) vinyl carboxylate esters, such as vinyl acetate, vinyl pivalate, and mixtures thereof; (b) (meth)acrylates, such as methyl(meth)acrylate, ethyl(meth)acrylate, butyl(meth)acrylate, hydroxyethyl(meth)acrylate, and mixtures thereof; (c) olefinically unsaturated carboxylic acids, such as (meth)acrylic acid, maleic acid, fumaric acid, and mixtures thereof; (d) (meth)acrylic acid derivatives, such as (meth)acrylonitrile, (meth)acrylic amide, and mixtures thereof; and (e) vinyl ethers, such as vinyl methyl ether, vinyl phenyl ether, and mixtures thereof.

Amongst these monomers, vinyl esters of monocarboxylic acids having 1 to 4 carbon atoms, such as vinyl acetate, and (meth)acrylates of alcohols having 1 to 4 carbon atoms, such as methyl (meth)acrylate, and mixtures thereof are preferred.

Especially preferred monomers are butyl acrylate, ethyl acrylate, methyl methacrylate, methyl acrylate and/or and mixtures thereof. Two or more such olefinically unsaturated compounds may be used in combination. The term "(meth)acrylic acid" is intended to embrace both acrylic acid and methacrylic acid.

The monomer units with polar groups are present in an amount of from 1 to 25 mol.%, based on the total polyolefin composition. Preferably, the monomer units with polar groups are present in an amount of 1 to 15 mol%, more preferably 4 to 15 mol%, even more preferably 7 to 12 mol, based on the total polyolefin composition.

Apart from monomer units with polar groups, the one or more alpha-olefin copolymer(s) (a) also contain(s) monomer units with hydrolysable silane-groups. These silane-groups may be introduced into the polymer either via grafting, as e.g. described in US 3,646,155 and US 4,117,195, or preferably via copolymerization of an alpha-olefin in the presence of monomer units with polar groups and monomer units with hydrolysable silane groups.

In cases where a copolymerization is used, the complete monomer with silane groups is designated by the expression "monomer unit with hydrolysable silane-groups".

Preferably, the alpha-olefin copolymer (a) has been obtained by copolymerization. In the case of polyethylene, the copolymerization is preferably carried out with monomer unit with hydrolysable silane-groups represented by the formula

$$R^1SiR^2_qY_{3-q} \qquad (I)$$

wherein

$R^1$ is an ethylenically unsaturated hydrocarbyl, hydrocarbyloxy or (meth)acryloxy hydrocarbyl group,
$R^2$ is an aliphatic saturated hydrocarbyl group, Y which may be the same or different, is a hydrolysable organic group and q is 0, 1 or 2.

Special examples of the monomer unit with hydrolysable silane-groups are those wherein $R^1$ is vinyl, allyl, isopropenyl, butenyl, cyclohexanyl or gamma-(meth)acryloxy propyl; Y is methoxy, ethoxy, formyloxy, acetoxy, propionyloxy or an alkyl-or arylamino group; and $R^2$, if present, is a methyl, ethyl, propyl, decyl or phenyl group.

A preferred monomer unit with hydrolysable silane groups is represented by the formula

$$CH_2=CHSi(OA)_3 \qquad (II)$$

wherein A is a hydrocarbyl group having 1-8 carbon atoms, preferably 1-4 carbon atoms.

The most preferred monomer units with hydrolysable silane groups are vinyl trimethoxysilane, vinyl bismethoxyethoxysilane, vinyl triethoxysilane, gamma-(meth)acryloxypropyltrimethoxysilane, gamma(meth)acryloxypropyltriethoxy-silane, and vinyl triacetoxysilane.

The copolymerization of the alpha-olefin, preferably ethylene in the presence of monomer units with polar groups and the monomer units with hydrolysable silane groups may be carried out under any suitable conditions resulting in the copolymerization of the alpha olefin, preferably ethylene and the two monomer units. The resulting alpha-olefin copolymer(s) (a) can thus also be labelled as terpolymer(s).

Preferably, the monomer units with hydrolysable groups are present in an amount of 0.001 wt.% to 15 wt.%, more preferably 0.01 wt.% to 5 wt.%, and most preferably 0.1 wt.% to 2 wt.% based on the total polyethylene composition.

The crosslinkable polyolefin composition of the present invention further comprises a copolymer of ethylene and a $C_3$ to $C_8$ alpha-olefin co-monomer (b) having a density of from 850 to 970 kg/m$^3$ and a MFR$_{2.16}$ of from 0.1 to 50 g/10 min, determined according to ISO 1133 at a temperature of 190 °C and a load of 2.16 kg.

The ethylene copolymer (b) may encompass high density, medium density, low density and even very low density ethylene copolymers. It may preferably have a density in the range of from 850 to 970-0 kg/m$^3$, more preferably from 860 to 930 kg/m$^3$, even more preferably from 860 kg/m$^3$ to 915 kg/m$^3$.

The ethylene copolymer (b) may preferably have a MFR$_{2.16}$ of 0.5 to 25 g/10min, more preferably of 1.0 to 15 g/10min, even more preferably of 1.5 to 10 g/10 min, measured according to ISO 1133.

The ethylene copolymer (b) is preferably a copolymer of ethylene with a $C_3$ to $C_{12}$ alpha-olefin co-monomer, such as propylene, 1-butene, 1-hexene, 1-octene and 1-decene. More preferably it is a copolymer of ethylene and 1-octene. The copolymer of ethylene and 1-octene may preferably have a density in the range of 850 kg/m$^3$ to 930 kg/m$^3$, more preferably in the range of 855 kg/m$^3$ to 920 kg/m$^3$, even more preferably in the range of from 870 kg/m$^3$ to 910 kg/m$^3$, measured according to ISO 1183-187.

Preferably, ethylene-1-butene or ethylene-1-octene copolymers (plastomers) can be used. Any copolymer of ethylene and 1-butene or 1-octene having the above defined properties may be used. Preferred materials are commercially available, i.a. from Borealis under the tradename Queo, from DOW Chemical Corp (USA) under the tradename Engage or Affinity, or from Mitsui Chemicals under the tradename Tafmer.

Alternatively, these plastomers can be prepared by known processes, in a one stage or two stage polymerization process, comprising solution polymerization, slurry polymerization, gas phase polymerization or combinations therefrom, in the presence of suitable catalysts, like vanadium oxide catalysts or single-site catalysts, e.g. metallocene or constrained geometry catalysts, known to the person skilled in the art. Preferably, metallocene type catalysts are used.

Preferably, these plastomers are prepared by a one stage or two stage solution polymerization process, especially by high temperature solution polymerization process at temperatures higher than 100°C.

Such process is essentially based on polymerizing the monomer and a suitable comonomer in a liquid hydrocarbon solvent in which the resulting polymer is soluble. The polymerization is carried out at a temperature above the melting point of the polymer, as a result of which a polymer solution is obtained. This solution is flashed in order to separate the polymer from the unreacted monomer and the solvent. The solvent is then recovered and recycled in the process.

Preferably, the solution polymerization process is a high temperature solution polymerization process, using a polymerization temperature of higher than 100°C. More preferably, the polymerization temperature is at least 110°C, even more preferably at least 150°C. The polymerization temperature can be up to 250°C.

The pressure in such a solution polymerization process is preferably in a range of 10 to 100 bar, more preferably 15 to 100 bar and even more preferably 20 to 100 bar. The liquid hydrocarbon solvent used is preferably a $C_{5-12}$-hydrocarbon which may be unsubstituted or substituted by $C_{1-4}$ alkyl group such as pentane, methyl pentane, hexane, heptane, octane, cyclohexane, methylcyclohexane and hydrogenated naphtha. More preferably, unsubstituted $C_{6-10}$-hydrocarbon solvents are used.

A known solution technology suitable for the process according to the invention is the Borceed™ technology.

The crosslinkable polyolefin composition of the present invention may preferably comprise a silanol condensation catalyst in an amount of 0.0001 to 5 wt.% based on the total polyolefin composition. The silanol condensation catalyst may be present in an amount of preferably 0.0005 to 4 wt.%, more preferably 0.001 to 3 wt.%, even more preferably 0.005 to 2 wt.%, and still more preferably 0.05 to 1 wt.% based on the total polyolefin composition.

Preferably, the silanol condensation catalyst comprises Lewis acids, inorganic acids such as sulphuric acid and hydrochloric acid, and organic acids such as citric acid, stearic acid, acetric acid, sulphonic acid and alkanoic acids as dodecanoic acid.

Preferably, the silanol condensation catalyst comprises a sulphonic acid based catalyst or a tin based catalyst.

Preferably, the silanol condensation catalyst is a sulphonic acid based catalyst according to formula (III)

$$ArSO_3H \qquad (III)$$

or a precursor thereof, Ar being a hydrocarbyl substituted aryl group and the total compound containing 14 to 28 carbon atoms.

Preferably, the Ar group is a hydrocarbyl substituted benzene or naphthalene ring, the hydrocarbyl radical or radicals containing 8 to 20 carbon atoms in the benzene case and 4 to 18 atoms in the naphthalene case.

It is further preferred that the hydrocarbyl radical is an alkyl substituent having 10 to 18 carbon atoms and still more preferred that the alkyl substituent contains 12 carbon atoms and is selected from dodecyl and tetrapropyl. Due to commercial availability it is most preferred that the aryl group is a benzene substituted group with an alkyl substituent containing 12 carbon atoms.

Preferably, the sulphonic acid based catalyst comprises dodecyl benzene sulphonic acid, tetrapropyl benzene sulphonic acid, alkylated naphthalene sulphonic acid, arylalkyl sulphonic acid, alkylated aryl disulphonic acid or mixtures thereof, preferably consists of dodecyl benzene sulphonic acid or tetrapropyl benzene sulphonic acid.

The silanol condensation catalyst may also be precursor of a compound of formula (III), i.e. a compound that is converted by hydrolysis to a compound of formula (III). Such a precursor is for example the acid anhydride of the sulphonic acid compound of formula (III). Another example is a sulphonic acid of formula (III) that has been provided with a hydrolysable protective group as e.g. an acetyl group which can be removed by hydrolysis to give the sulphonic acid of formula (III).

Preferably, the tin based catalyst is one or more selected from the group of dibutyl tin dilaureate (DBTDL), dioctyl tin dilaureate (DOTDL), dibutyl tin diacetate, stannous acetate, stannous caprylate. More preferably, the condensation catalyst (B) is dibutyl tin dilaureate, dioctyl tin dilaureate or a mixture thereof, most preferably the condensation catalyst (B) is dioctyl tin dilaureate (DOTDL).

The silanol condensation catalyst is preferably added as a crosslinking catalyst masterbatch (CM) to the crosslinkable polyolefin composition of the invention. The masterbatch preferably comprises the above-described silanol condensation catalyst and a polymeric carrier, and optionally other additives such as an antioxidant. The polymeric carrier is preferably an ethylene copolymer, more preferably a copolymer of ethylene and a monomer containing alkyl acrylate groups, and most preferably an ethylene butylacrylate copolymer.

The polyolefin composition according to the invention can be crosslinked. Preferably, the polyolefin composition according to the invention is crosslinked. The crosslinking of the polyolefin composition of the invention is preferably carried out by so-called moisture curing as is known in the art. Reference is made to e.g. WO 95/17463 and WO 00/36612.

In a first step, the silane groups of the alpha-olefin copolymer(s) are hydrolysed under the influence of water or steam, resulting in the splitting-off of alcohol and the formation of silanol groups. In a second step, the silanol groups are crosslinked by a condensation reaction splitting off water. In both steps, the silanol condensation catalyst as described herein may preferably be used as catalyst.

Crosslinking can be carried out at ambient conditions, preferably at 45% to 65 % relative humidity and a temperature of 20 °C to 25 °C, most preferably at 55% relative humidity and a temperature of 23°C. Crosslinking can also be carried out at elevated temperature, preferably at 50 °C to 90°C in water. The polyolefin composition may also comprise a conventional low density or high density polyethylene or a polypropylene to increase the melting temperature of the composition.

The crosslinkable polyolefin composition of the present invention may preferably have a tensile strength of at least 12.5 MPa, more preferably at least 13 MPa, even more preferably at least 15 MPa, determined according to ISO 527-1: 2012 at 23°C and 50% relative humidity. The crosslinkable polyolefin composition of the present invention may preferably have a tensile strength of not more than 40 MPa, more preferably not more than 30 MPa, or alternatively preferable not more than 25 MPa, determined according to ISO 527-1: 2012 at 23°C and 50% relative humidity. Each of the lower limits may be combined with each of the upper limits indicated for tensile strength.

The crosslinkable polyolefin composition of the present invention may preferably have a flexural modulus of not more than 50 MPa, more preferably not more than 40 MPa, even more preferably not more than 35 MPa, determined according to ISO 178. The crosslinkable polyolefin composition of the present invention may preferably have a flexural modulus of not less than 2 MPa, more preferably not less than 5 MPa, determined according to ISO 178 in view of mechanical performance. Each of the lower limits may be combined with each of the upper limits indicated for flexural modulus.

The crosslinkable polyolefin composition of the present invention may preferably have a hot set elongation of not more than 180 %, more preferably of not more than 100 %, even more preferably of not more than 80 %, determined according to IEC 60811-507, by measuring thermal deformation at 200°C and at a load of 20 N/cm$^2$. The crosslinkable polyolefin composition of the present invention may preferably have a hot set elongation of not less than 10 %, more preferably of not less than 15 %, even more preferably of not less than 20 %, determined according to IEC 60811-507, by measuring thermal deformation at 200°C and at a load of 20 N/cm$^2$. Each of the lower limits may be combined with each of the upper limits indicated for hot set elongation.

The crosslinkable polyolefin composition of the invention surprisingly extends the application range for the use as an insulation or jacketing material for wire and cable applications, especially for LV wire and cables. The compositions of the invention show high flexibility (low flexural modulus) and at the same time have improved mechanical strength, such as high tensile strength and reduced hot set elongation. Conventional flexible compositions for wire and cable applications suffered from reduced mechanical strength and excessive hot set elongation.

Accordingly, the present invention extends the application range for LV cables into the rubber cable area, but also simplifies the production of elastomeric cables. Elastomeric (EPR) cables are commonly produced by complicated peroxide vulcanisation lines and also need to handle EPR bales. The compositions of the present invention may be produced using a standard PVC/PE extrusion line and handling pellets. There is no need for specific high humidity or waterbath environment, as the polymerization may be conducted with standard silanol condensation catalyst technology. Due to the low crystallinity the composition of the present invention can be crosslinked much quicker (e.g. about four times quicker than with standard silanol condensation catalyst technology.

Preferably, the crosslinkable polyolefin composition of the invention is used in at least one layer of a cable, such as a low voltage (LV) or medium voltage (MV) cable. The at least one layer may preferably be an insulation layer or a sheath layer.

Thus, the crosslinkable polyolefin compositions of the invention may be used for increasing the tensile strength and/or flexibility of a cable, particularly a LV or MV cable.

The crosslinkable polyolefin compositions of the invention may be further be used for the production of shrink sleeves, foams, shoe soles, or seals.

**EXAMPLES**

**1. Determination Methods**

**a) Melt Flow Rate (MFR)**

The melt flow rate (MFR) is determined according to ISO 1133 and is indicated in g/10 min. The MFR is an indication of the flowability, and hence the processability, of the polymer. The higher the melt flow rate, the lower the viscosity of the polymer.

The MFR$_2$ of polyethylene (co-)polymers is measured at a temperature 190 °C and at a load of 2.16 kg.

**b) Density**

Density of the polymer was measured according to ISO 1183-1:2004 Method A on compression moulded specimen prepared according to EN ISO 1872-2 and is given in kg/m$^3$

**c) Comonomer content**

**Quantification of microstructure by NMR spectroscopy**

Quantitative nuclear-magnetic resonance (NMR) spectroscopy was used to quantify the comonomer content of the polymer.

Quantitative $^1$H NMR spectra recorded in the molten-state using a Bruker Avance III 500 NMR spectrometer operating at 500.13 MHz. All spectra were recorded using a $^{13}$C optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}. Standard single-pulse excitation was employed using a recycle delay of 2s {pollard04, klimke06}. A total of 16 transients were acquired per spectra.

Quantitative $^1$H NMR spectra were processed, integrated and quantitative properties determined using custom spectral analysis automation programs. All chemical shifts were internally referenced to the bulk ethylene methylene signal at 1.33 ppm.

Assignment for methylacrylate (MA) incorporation {brandolini01}:
Characteristic signals resulting from incorporation of methyl acrylate, in possible various comonomer sequences, were observed. The overall methylacrylate incorporation was quantified using the integral of the signal at 3.6 ppm assigned to the 1 MA site, accounting for the number of reporting nuclei per comonomer:

$$MA = I_{1MA} / 3$$

The ethylene content was quantified using the integral of the bulk aliphatic ($I_{bulk}$) signal between 0.00 - 3.00 ppm. The total ethylene content was calculated based on the bulk integral and compensating for the observed comonomer:

$$E = (1/4)*[\ I_{bulk} - 3*MA]$$

The total mole fractions of methylacrylate in the polymer was calculated as:

$$fMA = MA / (\ E + MA)$$

The total comonomer incorporations of methylacrylate in mole percent was calculated from the mole fraction in the standard manner:

$$MA\ [mol\%] = 100 * fMA$$

The total comonomer incorporations of methylacrylate in weight percent was calculated from the mole fractions in the standard manner:

$$MA\ [wt\%] = 100 * (\ fMA * 86.09) / (\ (fMA * 86.09) + ((1-fMA) * 28.05)\ )$$

klimke06
Klimke, K., Parkinson, M., Piel, C., Kaminsky, W., Spiess, H.W., Wilhelm, M., Macromol. Chem. Phys. 2006;207:382.
parkinson07
Parkinson, M., Klimke, K., Spiess, H.W., Wilhelm, M., Macromol. Chem. Phys. 2007;208:2128.
pollard04
Pollard, M., Klimke, K., Graf, R., Spiess, H.W., Wilhelm, M., Sperber, O., Piel, C., Kaminsky, W., Macromolecules 2004;37:813.

castignolles09
Castignolles, P., Graf, R., Parkinson, M., Wilhelm, M., Gaborieau, M., Polymer 50 (2009) 2373.
brandolini01
A.J. Brandolini, D.D. Hills, "NMR spectra of polymers and polymer additives", Marcel Deker Inc., 2000.

**d) FTIR**

The amount of vinyl trimethoxy silane in the polymers was measured by Fourier Transform Infrared Spektroscopy (FTIR). The wt.% of vinyl trimethoxy silane was determined from the peak for silane at 945 $cm^{-1}$, which was compared to the peak of polyethylene at 2665 $cm^{-1}$.

**e) Flexural Modulus**

Flexural Modulus Flexural modulus was determined according to ISO 178. The test specimens were extruded tapes with a thickness of 2 mm. The length of the span between the supports was 64 mm, the test speed was 2 mm/min and the load cell was 100 N. The equipment used was an Alwetron TCT 25. The specimen were conditioned for minimum 16 hours at 23+/-2°C and 50% relative humidity prior testing.

**f) Hot Set elongation (%)**

To determine that the crosslinkable polyethylene composition are properly cured the hot set elongation and permanent set are determined according to IEC 60811-507, by measuring thermal deformation at 200°C and at a load of 20 $N/cm^2$ is used. Three dumb-bell test samples are prepared from a tape consisting of a polyethylene composition to be tested by cutting test samples from the tape. Each test sample is fixed vertically from upper end thereof in the oven and the load of 20 $N/cm^2$ are attached to the lower end of each test sample. After 15 min, 200°C in oven the distance between the premarked lines is measured and the percentage hot set elongation is calculated and expressed as Hot Set elongation in %.

For permanent set %, the tensile force (weight) is removed from the test samples and after recovered in 200°C for 5 minutes and then let to cool in room temperature to ambient temperature. The permanent set % is calculated from the distance between the marked lines.

**g) Tensile strength at break and Tensile strain at break (elongation at break)**

The tensile strength at break and tensile strain at break were measured in accordance with ISO 527-1: 2012 at 23°C and 50% relative humidity on an Alwetron TCT 10 tensile tester at a speed of 250 mm/min. The extensometer used was MFE-900. The test specimens were extruded tapes with a thickness of 2 mm. The specimens were conditioned for minimum 16 hours at 23+/-2°C and 50% relative humidity prior testing. The average value out of 6 to 10 samples is reported herein.

**2. Materials**

**a) Ethylene copolymers**

The ethylene copolymers (a) with the type and amount of comonomer indicated used in the present invention are given in Table 1 below.

Polymer A and Polymer B were produced in a 660m long split feed high pressure tubular reactor (Union Carbide type A-1). The inner wall diameter is 32 mm. Chain transfer agent (propylene), initiators (t-butylperoxy 2-ethylhexanoate (Luperox 26) and air) and co-monomers were added to the reactor in a conventional manner.

Polymerization pressure were 230 MPa and the maximum polymerization termperature 285°C for polymer A and 310°C for polymer B...

**Table 1:** Ethylene copolymers (a)

| Material | Polymer A | Polymer B |
|---|---|---|
| $MFR_{2.16}$, g/10 min | 5.6 | 1 |
| Density, $kg/m^3$ | 944 | 923 |
| VTMS content, wt.% | 1.4 | 1.1 |

(continued)

| Material | Polymer A | Polymer B |
|---|---|---|
| Scorch retarder (HDTMS), wt.% | 4 | 0.35 |
| Polar group | MA | None |
| Polar group content, wt.% / mol.% | 22/8.4 | 0 |
| MA: methyl acrylate<br>VTMS: vinyl trimethoxy silane<br>HDTMS: hexadecyl trimethoxy silane | | |

The ethylene copolymers (b) are given in Table 2 below. Polymers D, E and F are low density copolymers of ethylene and 1-octene. Properties of the copolymers are given in Table 2 as well.

**Table 2:** Ethylene copolymers (b)

| Ethylene copolymer (b) | density, kg/m$^3$ | MFR 190°C/ 2.16kg | flexural modulus, MPa | tensile strength, MPa | Elongation at break, % | $T_m$, °C |
|---|---|---|---|---|---|---|
| Polymer D (Queo™ 8201) | 883 | 1.1 | 23 | 23 | 750 | 73 |
| Polymer E (Queo™ 201) | 902 | 1.1 | 72 | 36 | 715 | 97 |
| Polymer F (Queo™ 7001 LA) | 870 | 1 | 8 | 7 | 400 | 56 |

Ethylene copolymers (b) are commercially available from Borealis AG, Vienna under the tradename Queo™.

The compositions of the invention are illustrated by Examples 1 to 6 in Table 3 below. As a comparison, a base resin being a terpolymer of ethylene, methyl acrylate and vinyl trimethoxysilane (Polymer A) was produced as described above.

**Preparation of the polymer compositions**

The polymer compositions according to the inventive examples (Ex.1 to Ex.6) were produced by mixing the components together in a BUSS-co-kneader (46 mm) at a screw speed of 225 rpm and at a set temperature of 40, 160, 180, 200°C in the kneading section and at 200°C in the pelletizing extruder. The mixer screw was heated to 120°C. The extruder screw temperature was 160°C, the barrel heated to 170°C and the speed 4 rpm. All components were added in port 1,

**Manufacture of tape**

For determining the tensile strength, elongation at break, flexural modulus and hot-set elongation tapes (1.8 mm) were produced on a Collin TeachLine E20T tape extruder with a 4.2:1, 20D compression screw with a 20 mm diameter. The temperature profile for Polymer A was 150/160/170°C and the screw speed was 55 rpm. For Polymer B the temperature profile was 150/ 180/ 200 with a screw speed of 55 rpm. A commercial crosslinking catalyst masterbatch (Ambicat™, available from Borealis AG, Austria) was added at a concentration of 5 wt% to all formulations disclosed in Table 3.

Prior to hot-set testing, the tapes were crosslinked in water at 90°C for 24 hours.

**Table 3:** Crosslinkable ethylene copolymers

| | Grade | density, Kg/m$^3$, | MFR 190°C/ 2.16kg | flexural modulus, MPa | tensile strength, MPa | strain at break, % | Hot set elongation, % |
|---|---|---|---|---|---|---|---|
| CE1 | 100%Polymer A | 944 | 5,6 | 30 | 10.5 | 320 | 18 |
| CE2 | 100% Polymer B | 923 | 1 | 170 | 16 | 463 | 60 |

(continued)

|  | Grade | density, Kg/m$^3$, | MFR 190°C/ 2.16kg | flexural modulus, MPa | tensile strength, MPa | strain at break, % | Hot set elongation, % |
|---|---|---|---|---|---|---|---|
| **Ex. 1** | 80% Polymer A + 20% Polymer D | 919 | 3.35 | 26.89 | 15.53 | 373 | 22 |
| **Ex. 2** | 70% Polymer A + 30% Polymer D | 907 | 3.9 | 26.58 | 16.96 | 386 | |
| **Ex.3** | 90% Polymer A + 10% Polymer E | 940 | 5.5 | 30.37 | 15.89 | 376 | 18 |
| **Ex. 4** | 80% Polymer A + 20% Polymer E | 936 | 4.5 | 33.12 | 18.04 | 392 | 24 |
| **Ex. 5** | 70% Polymer A + 30% Polymer E | 931 | 4 | | 21.47 | 422 | 25 |
| **Ex. 6** | 50% Polymer A + 50% Polymer F | 907 | 2.1 | 17.7 | 15.81 | 434 | 95 |

The above results show that the admixture of an ethylene copolymer (b) according to the invention (e.g. polymers D, E or E) into an ethylene copolymer (a) (e.g. into Polymer A), improves or maintains low values of flexural modulus, so that highly flexible products can be obtained. Simultaneously, the inventive examples show that tensile strength could greatly increased over Polymer A and values in the range of Polymer B, a conventional silane/ethylene copolymer with low flexibility, could be obtained. All inventive examples Ex. 1 to Ex. 6 fulfilled a tensile strength of 12.5 MPa, required for standard low voltage cables according to HD 603S1:1994 Part 1 Accordingly, the present invention surprisingly extends the range of polymer compositions for LV cables into the rubber cable area, but also simplify the production of rubber cables. The compositions of the present invention can be produced in a standard PVC/PE extrusion line. The crosslinking step for the compositions of the invention is compatible with known silanol condensation catalysts and crosslinking speed is about four times faster than with conventional silane/ethylene copolymers.

## Claims

1. A crosslinkable polyolefin composition comprising

   (a) 50 to 99 wt.%, based on the total polyolefin composition, of one or more alpha-olefin copolymer(s) containing monomer units with polar groups and monomer units with hydrolysable silane groups, wherein the monomer units with polar groups are present in an amount of from 1 to 25 mol.% based on the total polyolefin composition, and
   (b) 1 to 50 wt.%, based on the total polyolefin composition, of a copolymer of ethylene and a $C_3$ to $C_8$ alpha-olefin co-monomer having a density of from 850 to 970 kg/m$^3$ and a $MFR_{2.16}$ of from 0.1 to 50 g/10 min, determined according to ISO 1133 at a temperature of 190 °C and a load of 2.16 kg.

2. The crosslinkable polyolefin composition according to claim 1, wherein the one or more alpha-olefin copolymer (a) is one or more ethylene copolymer(s).

3. The crosslinkable polyolefin composition according to claim 1 or 2, wherein the monomer units with polar groups are selected from the group consisting of butyl acrylate, ethyl acrylate, methyl acrylate and methyl methacrylate, and mixtures thereof.

4. The crosslinkable polyolefin composition according to any one of claims 1 to 3, wherein the monomer units with polar groups are present in the one or more alpha-olefin copolymer(s) (a) in an amount of from 1 to 15 mol.%, based on the total polyolefin composition.

5. The crosslinkable polyolefin composition according to any one of the preceding claims, wherein monomer units with hydrolysable silane groups are selected from the group consisting of vinyl trimethoxy silane, vinyl bismethoxyethoxy silane, vinyl triethoxy silane, gamma-(meth)acryl-oxypropyltrimethoxy silane, gamma(meth)acryloxypropyltriethoxy silane, vinyl triacetoxy silane and mixtures thereof.

6. The crosslinkable polyolefin composition according to any one of the preceding claims, wherein the monomer units with hydrolysable groups are present in the one or more alpha-olefin copolymer(s) (a) in an amount of 0.001 wt.% to 15 wt.%, based on the total polyolefin composition.

7. The crosslinkable polyolefin composition according to any one of the preceding claims, wherein the ethylene copolymer (b) is a low density copolymer of ethylene and 1-octene.

8. The crosslinkable polyolefin composition according to any one of the preceding claims, wherein the composition further comprises a silanol condensation catalyst (c) in an amount of 0.0001 to 5 wt.%, based on the total polyolefin composition.

9. The crosslinkable polyolefin composition according to claim 8, wherein the silanol condensation catalyst comprises a sulphonic acid based catalyst or a tin based catalyst.

10. The crosslinkable polyolefin composition according to any one of the preceding claims, wherein the composition has a tensile strength of at least 12.5 MPa, determined according to ISO 527-1: 2012 at 23°C and 50% relative humidity.

11. The crosslinkable polyolefin composition according to any one of the preceding claims, wherein the composition has a flexural modulus of not more than 50 MPa, determined according to ISO 178.

12. The crosslinkable polyolefin composition according to any one of the preceding claims, wherein the composition has a hot set elongation of not more than 180 %, determined according to IEC 60811-507, by measuring thermal deformation at 200°C and at a load of 20 N/cm$^2$.

13. A cable comprising at least one layer, the at least one layer comprising the crosslinkable polyolefin composition according to any one of claims 1 to 12.

14. The cable according to claim 13, wherein the at least one layer is an insulation layer or a sheath layer.

15. Use of the crosslinkable polyolefin composition according to any one of claims 1 to 12 for increasing the tensile strength and/or flexibility of a cable.

Europäisches
Patentamt

European
Patent Office

Office européen
des brevets

# EUROPEAN SEARCH REPORT

Application Number

EP 21 17 5686

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/095483 A1 (FAGRELL OLA [AT] ET AL) 26 March 2020 (2020-03-26) * paragraphs [0397] - [0404]; examples IE5-IE12 * * paragraphs [0416], [0417] * * claims 1-17 * * paragraphs [0113], [0135], [0143] - [0145], [0231] - [0235] * ----- | 1-12 | INV. C08L23/08 C08L23/26 H01B3/44 C08L43/04 |
| A,D | EP 3 734 617 A1 (BOREALIS AG [AT]) 4 November 2020 (2020-11-04) * the whole document * ----- | 1-15 | |

TECHNICAL FIELDS
SEARCHED    (IPC)

H01B
C08L
C08F

The present search report has been drawn up for all claims

| Place of search | Date of completion of the search | Examiner |
|---|---|---|
| Munich | 15 November 2021 | Lippert, Sigrid |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 17 5686

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2021

| Patent document cited in search report | | Publication date | Patent family member(s) | | Publication date |
|---|---|---|---|---|---|
| US 2020095483 | A1 | 26-03-2020 | CA | 3044157 A1 | 07-06-2018 |
| | | | CN | 110023085 A | 16-07-2019 |
| | | | EP | 3548282 A1 | 09-10-2019 |
| | | | JP | 2020513430 A | 14-05-2020 |
| | | | RU | 2720781 C1 | 13-05-2020 |
| | | | US | 2020095483 A1 | 26-03-2020 |
| | | | WO | 2018099816 A1 | 07-06-2018 |
| EP 3734617 | A1 | 04-11-2020 | EP | 3734617 A1 | 04-11-2020 |
| | | | WO | 2020221822 A1 | 05-11-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009002845 A1
- EP 3734617 A1
- WO 0068957 A1
- US 3646155 A
- US 4117195 A
- WO 9517463 A
- WO 0036612 A

**Non-patent literature cited in the description**

- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **CASTIGNOLLES, P. ; GRAF, R. ; PARKINSON, M. ; WILHELM, M. ; GABORIEAU, M.** *Polymer,* 2009, vol. 50, 2373
- **A.J. BRANDOLINI ; D.D. HILLS.** NMR spectra of polymers and polymer additives. Marcel Deker Inc, 2000